# EUROPEAN PATENT APPLICATION

(11) **EP 2 529 722 A2**
(43) Date of publication of application: **05.12.2012**
(21) Application number: 11177782.7
(22) Date of filing: 17.08.2011
(51) Int. Cl.: A61J 9/00, A61J 11/04, A61J 9/06

(54) **Feeding bottle**

(30) Priority: 08.08.2011 CN 201110226006; 03.06.2011 CN 201110151819
(71) Applicant: Shiwei, Wu, Guangzhou Guangdong (CN)
(72) Inventor: Shiwei, Wu, Guangzhou Guangdong (CN); Qiang, Zhang, Guangzhou Guangdong (CN); Ying, Ning, Guangzhou Guangdong (CN)
(74) Representative: Grünecker, Kinkeldey, Stockmair & Schwanhäusser

(57) **Abstract**

A feeding bottle includes a bottle body, a retaining member, a sucking component and a nipple. The bottle defines an opening, the retaining member has a bowl portion and a barrel portion, the bowl forms peripheral flange. The sucking component includes a tube and a sucking head, the nipple includes a latching section having resisting flange. The bottle body, the retaining member, the sucking component, and the nipple are made of silicon material, the retaining member engages into the bottle body, the tube and the sucking head are received in the bottle body, the bowl portion is received in the open, and the peripheral flange abuts on the top of the open. The nipple engages with the retaining member, the latching section fits with the barrel portion, and the resisting flange abuts on the peripheral flange.

## Description

### BACKGROUND

### 1. Field of the invention

The present invention relates to liquid containers, and more particularly to a feeding bottle.

### 2. Description of related art

Feeding bottles generally include a bottle body and a rubber nipple held on the bottle body by a screwed cap. A problem with conventional feeding bottles is that as an infant sucks on the nipple, a negative pressure builds up within the bottle body. As a result, the nipple might easily deform, and the infant is difficult to drink water or milk from the bottle body. In addition, a conventional feeding bottle is made of silicone rubber containing silica hydrated. However, the silica hydrated will affect the transparency of the feeding bottle.

Therefore, there is room for improvement within the art.

### BRIEF DESCRIPTION OF THE DRAWINGS

Many aspects of the feeding bottle can be better understood with reference to the following drawings. These drawings are not necessarily drawn to scale, the emphasis instead being placed upon clearly illustrating the principle of the present feeding bottle. Moreover, in the drawings like reference numerals designate corresponding parts through the several views.

FIG 1 is a cross-sectional view of a feeding bottle, in accordance with an exemplary embodiment.

FIG.2 is an exploded, isometric view of the feeding bottle shown in FIG 1.

FIG.3 is an enlarged, isometric view of a retaining member of the feeding bottle shown in FIG. 2.

FIG.4 is an enlarged, isometric view of a nipple of the feeding bottle shown in FIG.2.

### DETAILED DESCRIPTION

The present invention will now be described more specifically with reference to the following embodiments. It is to be noted that the following descriptions of exemplary embodiments of this invention are presented herein for purpose of illustration and description only. It is not intended to be exhaustive or to be limited to the precise form disclosed.

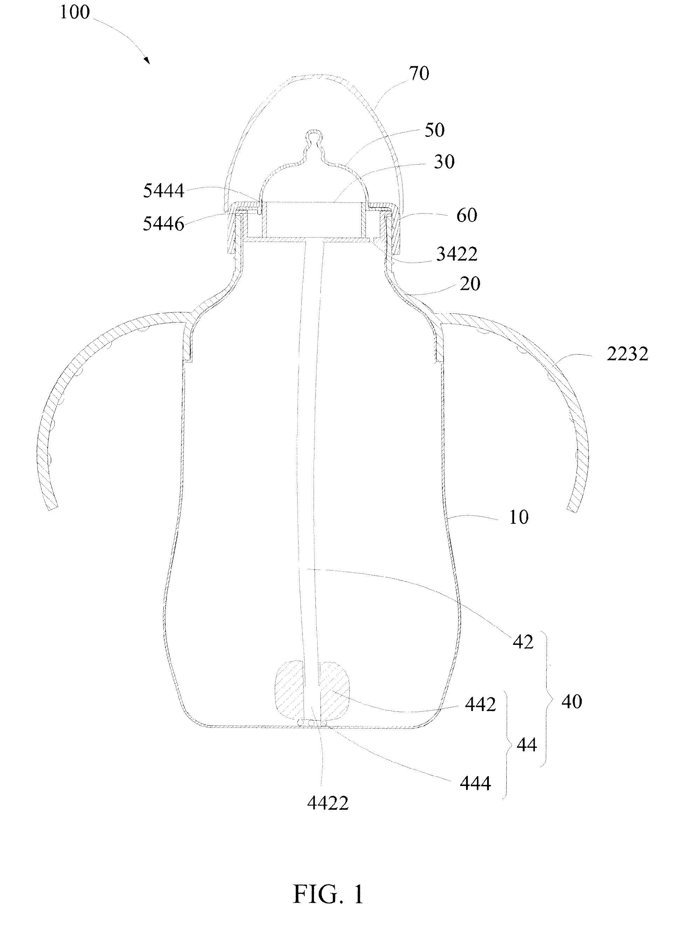

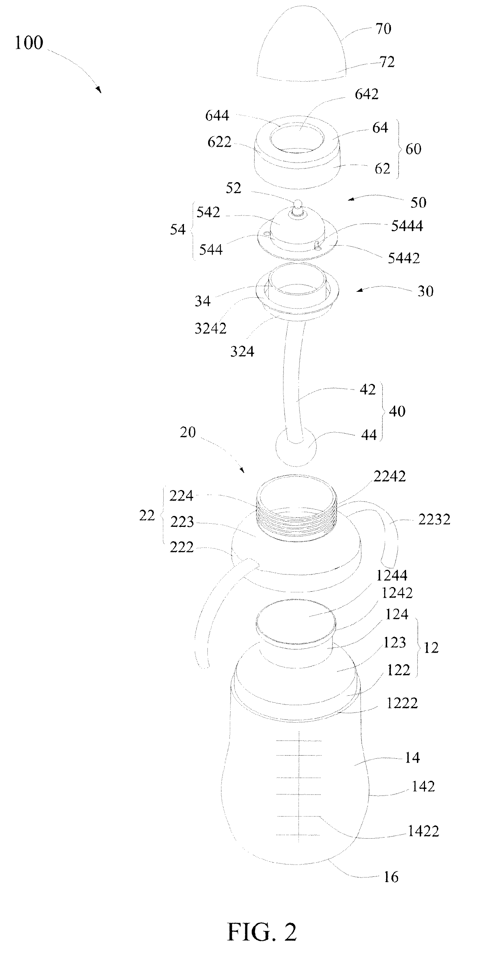

Referring to FIGs.1 and 2, a feeding bottle 100, according to an exemplary embodiment, generally includes a bottle body 10, an engaging case 20, a retaining member 30, a sucking component 40, a nipple 50, a cover 60, and a cap 70.

The bottle body 10 is generally hollow and includes a top portion 12, a main portion 14 and a bottle bottom 16 integrally formed together, thereby cooperatively surrounding a receiving room (not shown) for containing liquid. The top portion 12, the main portion 14 and the bottle bottom 16 may be integrally molded of an elastomeric silicone material or transparent plastic material, which may be formed by blow molding or injection molding. When the bottle body 10 is made of elastomeric silicone material, the wall of the bottle body can have a more uniform thickness. A suitable transparent plastic material for forming the bottle body includes, but is not limited to, polystyrene, polypropylene, polystyrene-acrylonitrile, acrylonitile-butadiene-styrene, styrene-maleicanhydride, polyethylene, terephthalate, polyvinylcyclohexane, and blends thereof.

The top portion 12 is formed on one end of the main portion 14, and is configured to engage with the engaging case 20. The top portion 12 includes a first assembling section 122, a first transition section 123 and an annular first neck section 124. The first transition section 123 smoothly connects the first assembling section 122 to the first neck section 124. A resisting wall 1222 is formed at a junction of the first assembling section 122 and the main portion 14. The first neck section 124 has a smaller diameter than the first assembling section 122. An outer rim 1242 is formed on a top end of the first neck section 124 to secure one end of the engaging case 20. An opening 1244 is defined in the first neck section 124 to receive the retaining member 30. The main portion 14 has an outer circumference surface 142 labeled by volume graduation markings 1422. User can know the solution volume in the bottle body 10 from the graduation markings 1422.

The engaging case 20 is configured to match with the top portion 12, and includes a second assembling section 222, a second transition section 223, and a second neck section 224. The second assembling section 222, the second transition section 223, and the second neck section 224 respectively engage with the first assembling section 122, the first transition section 123 and the first neck section 124. The second transition section 223 includes a pair of opposite handles 2232 laterally extending from the circumference thereof. The second neck section 224 is shorter than the first neck section 124, and can be received in a space between the rim 1242 and the first transition section 123. An outer thread 2242 is formed on an outer circumference of the second neck section 224 for connecting the cover 60.

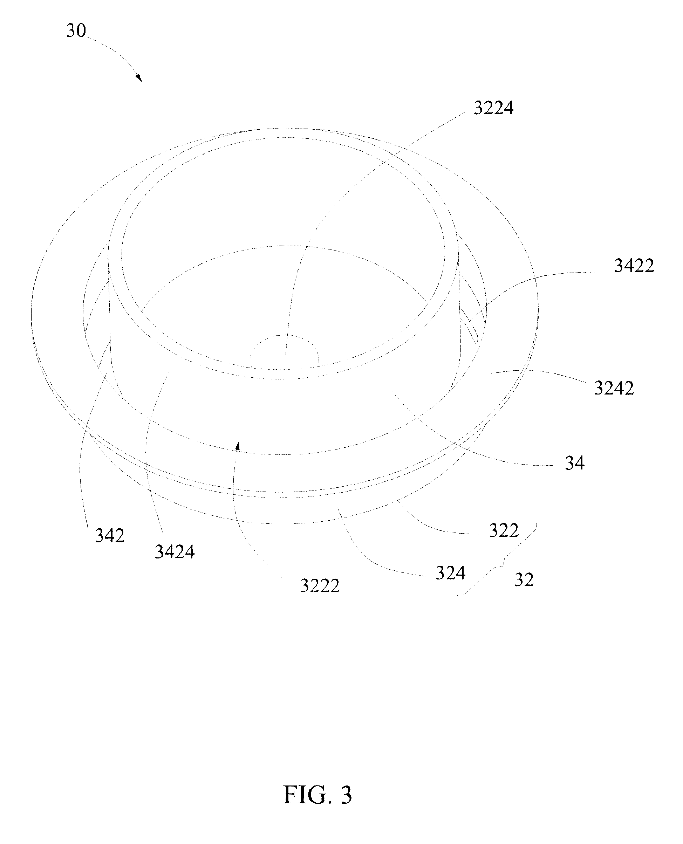

Referring further to FIG.3, the retaining member 3 0 can be made of transparent and flexible material, such as silicone material, plastic material and so on. The retaining member 30 includes a bowl portion 32, and a barrel portion 34 integrally formed in the bowl portion 32. The bowl portion 32 includes a bottom wall 322, and an extending wall 324 formed around the bottom wall 322 to enclose a chamber 3222. The bottom wall 322 defines a through central aperture 3224 to connect the sucking component 40. The extending wall 324 can be received in the opening 1244 of the bottle body 10. An annular flange 3242 extends from a top end of the extending wall 324, and is parallel to the bottom wall 322. The barrel portion 34 is tubular and is arranged in the chamber 3222. An annular space 342 is defined between the barrel portion 34 and the extending wall 324. The bottom wall 322 in the space 342 defines a plurality of through cutouts 3422. The barrel portion 34 extends out from the chamber 3222 to form a clamping section 3424 relative to the extending wall 324. The clamping section 3424 is a higher portion of the barrel portion 34 than the extending wall 324 as shown in FIG. 3. The clamping section 3424 is used for engagement with the nipple 50.

The sucking component 40 is to improve sucking for babies or infants. The sucking component 40 includes a tube 42 and a sucking head 44 connected to one end of the tube 42. The tube 42 is made of flexible material, such as silicone material, plastic material, and can be bendable. The tube 42 is approximately equal or longer than the bottle body 10. The other end of the tube 42 is connected to the aperture 3224 of the retaining member 30. The sucking head 44 is generally sphere-shaped or elliptical-shaped, and includes a head body 442 and a plurality of protrusions 444 extending from a bottom of the head body 442. The head body 442 defines a passage 4422 communicating with the tube 42. The sucking head 44 can keep close to the bottle bottom 16 after the sucking component 40 is installed in the bottle body 10, the protrusions 444 resist against the bottle bottom 16. The protrusions 444 can prevent the sucking head 44 from completely attaching on the surface of the bottle bottom 16, and ensures the liquid in the bottle body 10 flowing into the tube 42 smoothly.

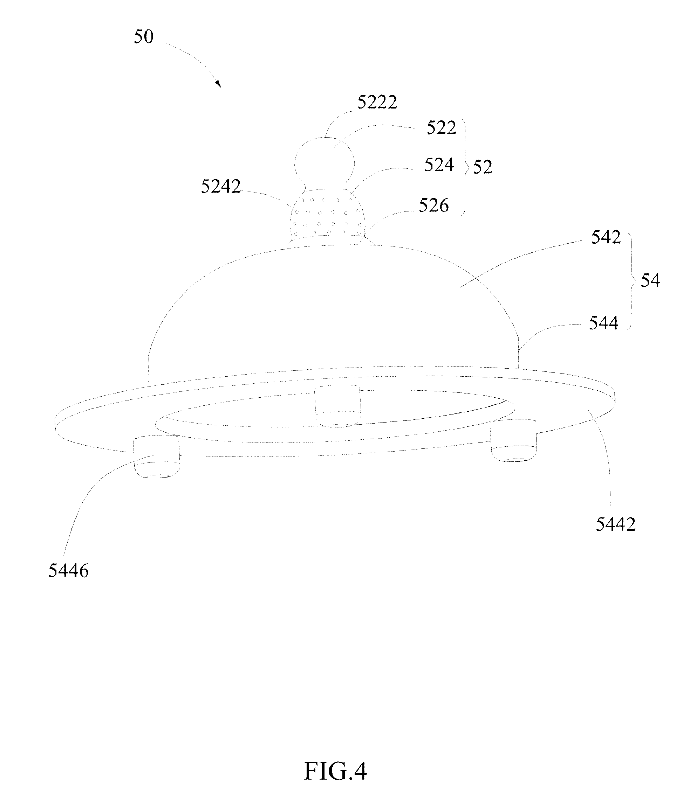

Referring to FIG. 4, the nipple 50 is made of a suitable elastomeric material, such as rubber, thermoplastic elastomer, or silicone material. The nipple 50 includes a sucking portion 52 and a cover portion 54 integrally formed together. The sucking portion 52 includes an upper section 522, a middle section 524 and a lower section 526. The upper section 522 can be a teat for being kept in the mouth of babies. The upper section 522 defines a hole 5222 in the top for liquid flowing out from the bottle body 10. The middle section 524 has a plurality of embosses 5242 around the outer circumference thereof, making babies can keep the upper section 522 steadily in the mouth. The lower section 526 is configured to smoothly connect the middle section 524 to the cover portion 54. The cover portion 54 is for engagement with the retaining member 30. The cover portion 54 includes a connecting section 542 and a latching section 544. The connecting section 542 is a half-sphere shaped configuration, and one side thereof is connected to the lower section 526. The latching section 544 longitudinally extends from the other side of the connecting section 542. The latching section 544 is used to fit with the clamping section 3424 of the retaining member 30. The latching section 544 includes a resisting flange 5442 extending laterally on the outer periphery of the latching section 544 opposite to the connecting section 542. The latching section 544 equally defines a plurality of air slots 5444, and the air slots 5444 extend through the resisting flange 5442. A plurality of air-guiding valves 5446 protrude from a bottom surface of the resisting flange 5442 to communicate with the air slots 5444. Each valve 5446 is a one-way valve, and can allow outer air into the bottle body 10 from the nipple 50 and stop air in the receiving room of the bottle body 10 flowing out.

The cover 60 includes a peripheral wall 62 and an end wall 64 at the top end of the peripheral wall 62. The peripheral wall 62 has an inner thread (not shown) for removably attached to the outer thread 2242 of the engaging case 20. An outer circumference of the peripheral wall 62 may contain ribs or knurling (not shown), allowing the caregiver to more easilly grip the cover 60 to remove it from or fit it on the engaging case 20. The outer circumference of the peripheral wall 62 defines a stepped portion 622 at the top end to engage with the cap 70. The end wall 64 defines a central aperture 642 having the same diameter as the latching section 544. Correspondingly, an interior peripheral rim 644 is formed dimensioned to the resisting flange 5442. Thus, the nipple 50 can be pressed into and steadily fit with the cover 60, with the sucking portion 52 exposing from the central aperture 642 and the resisting flange 5442 latching with the peripheral rim 644.

The cap 70 is for engagement with the cover 60 to protect the nipple 50. The cap 70 can be made of silicon material or plastic material, preferably of silicon material. The cap 70 has a bottom hoop portion 72 to fit with the stepped portion 622 of the cover 60.

To assemble the feeding bottle 100, the engaging case 20 is fit on the top portion 12 of the bottle body 10. The second transition section 223 and a second neck section 224 respectively engage with the first assembling section 122, the first transition section 123 and the first neck section 124. The engaging case 20 is received in the space between the rim 1242 and the first transition section 123.

The distal end of the tube 42 is inserted into and hold in the central aperture 3224 of the bowl portion 32 to connect the tube 42 to the retaining member 30.

The retaining member 30 assembled with the sucking component 40 is installed to the bottle body 10. The sucking component 40 is received in the bottle body 10, and the sucking head 44 is attached close to the bottle bottom 16. The protrusions 444 resist against the surface of the bottle bottom 16. The extending wall 324 of the retaining member 30 is received in the opening 1244, and the peripheral flange 3242 abuts against the top of the first neck section 124.

The nipple 50 is assembled on the retaining member 30. The latching section 544 of the nipple 50 is fitted to the clamping section 3424 of the retaining member 30, thereby forming a first guiding passage defined by the barrel portion 34, the nipple 50 and the tub 42. The resisting flange 5442 accordingly abuts with the peripheral flange 3242 of the retaining member 30, thereby forming a second guiding passage. The second guiding passage enters air from the air slots 5444 and the air-guiding valves 5446, and flows into the bottle body from the cutout 3422.

The inner thread of peripheral wall 62 engages with the outer thread 2242 of the engaging case 20 to mount the cover 60 to the engaging case 20. Thus, the peripheral rim 644 of the end wall 64 steadily resists against the resisting flange 5442 to secure the retaining member 30 and the nipple 50. The sucking portion 52 exposes out from the central aperture 642.

The cap 70 engages with the cover 60, with the bottom hoop portion 72 to fit with the stepped portion 622 of the cover 60. Accordingly, the feeding bottle 100 is assembled.

To fill liquid into the feeding bottle 100, the cover 60 is revolved relative to the engaging case 20. Due to the retaining member 30 latched into the cover 60, the cover 60 together with the nipple 50, the retaining member 30 and the sucking component 40 separates from the bottle body 10. The bottle body 10 can be filled with liquid from the opening 1244. After filling full of liquid, the cover 60 together with the nipple 50, the retaining member 30 and the sucking component 40 are assembled to the bottle body 10.

During sucking liquid in the bottle body 10, liquid flows into the first guiding passage enclosing by the barrel portion 34 from the sucking head 44 of the sucking component 40, and then flows out into baby's mouth from the nipple 50. As decreasing of liquid in the bottle body 10, the air pressure in the bottle body 10 decreases to form a negative pressure. In action of outer air pressure, outer air enters into the second guiding passage from the air slots 5444 and the valves 5446 of the nipple 50. The air further enters into the bottle body 10 from the cutouts 3422 of the retaining member 30 to keep the inner air pressure in the bottle body 10 the same with the outer air pressure. As such, the bottle body 10 is without deformation during sucking liquid.

The feeding bottle 100 can be made of elastomeric transparent silicon material, and keep the feeding bottle 100 flexible, lightweight and safe. The following will illustrate the detailed composition of the silicon material.

The silicon material is essentially consisted of a base compound, a silicone oil containing hydrogen, an inhibiting agent and an accelerating agent. In this exemplary embodiment, The silicon material is composed of: 100 parts by weight of the base compound; 2-10 parts by weight of a silicone oil containing hydrogen; 0.01-0.06 parts by weight of an inhibiting agent; and 0.01-0.08 parts by weight of an accelerating agent. The base compound is essentially consisted of vinyl silicon oil and methyl vinyl MQ silicon resin. A weight ratio of vinyl silicon oil and methyl vinyl MQ silicon resin is 100: 10-60.

The molecular formula of the methyl vinyl MQ silicon resin is: 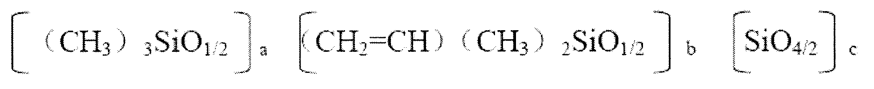 wherein, (a+ b) /c=0.5 ∼ 1, a, b, c are an integer of 1 to 9. The weight percentage of the vinyl in methyl vinyl MQ silicon resin is in a range from 1.0%-3.6%. The Vinyl silicon oil is polymethyl siloxane having vinyl long chain. The molecular formula of the Vinyl silicon oil is: 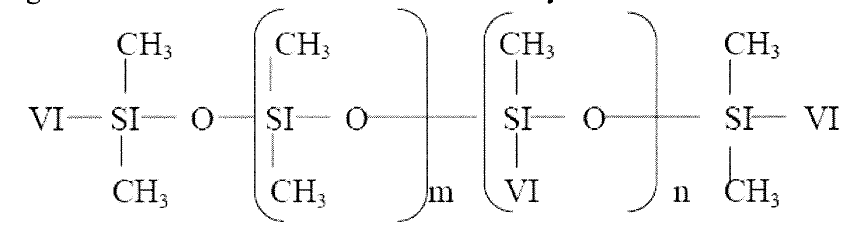 wherein, the character VI reperesents vinyl, m, n are an integer of 1 to 9. The molecular formula of the silicone oil containing hydrogen is: 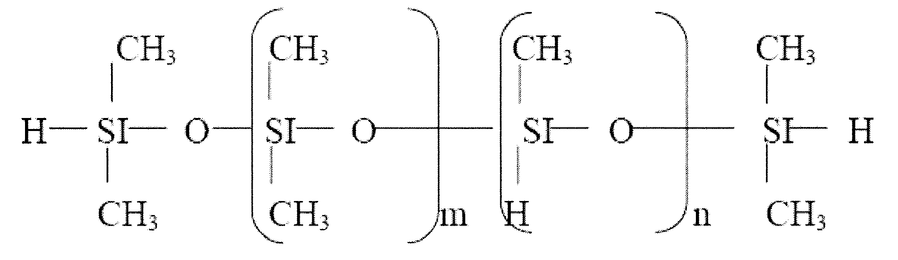 wherein, m, n are an integer of 1 to 9.

The inhibiting agent can be an alkynol, such as a methylpentynol for example. The accelerating agent can be an agent of containing platinum and gold. The content of the platinum is in a range from about 1000-6000ppm (part per million).

A method of making silicon material is illustrated as follow: adding methyl vinyl MQ silicon resin into a vinyl silicon oil to form the base compound. 2-10 parts by weight of the silicone oil containing hydrogen and 0.01-0.06 parts by weight of the inhibiting agent are added into 100 parts by weight of the base component, and are stirred. Then, 0.01-0.08 parts by weight of the accelerating agent are added into the above composition. The above composition is stirred, and solidifies to get the silicone material.

The following embodiments are described in detail to illuminate the preparation of the silicone material.

### Embodiment I

100 gram of base component including 20% of the methyl vinyl MQ silicone resin by weight is prepared. 5 gram of silicone oil containing hydrogen and 0.01 gram of inhibiting agent are added into the base compound, stirring it uniformly; 0.02 gram of accelerating agent is added into the base compound, stirring it uniformly. The mixed composition is solidified to get the needed silicone material.

### Embodiment II

100 gram of base component including 40% of the methyl vinyl MQ silicone resin by weight is prepared. 5 gram of silicone oil containing hydrogen and 0.01 gram of inhibiting agent are added into the base compound, stirring it uniformly; 0.02 gram of accelerating agent is added into the base compound, stirring it uniformly. The mixed composition is solidified to get the needed silicone material.

### Embodiment III

100 gram of base component including 60% of the methyl vinyl MQ silicone resin by weight is prepared. 5 gram of silicone oil containing hydrogen and 0.01 gram of inhibiting agent are added into the base compound, stirring it uniformly; 0.02 gram of accelerating agent is added into the base compound, stirring it uniformly. The mixed composition is solidified to get the needed silicone material.

According to the above three embodiments, the weight percentage of the methyl vinyl MQ silicon resin in the base compound is different, thus, the performance of the achieved silicone material have some differences. A performance comparison of the silicon material from the above embodiments is showed in table 1.

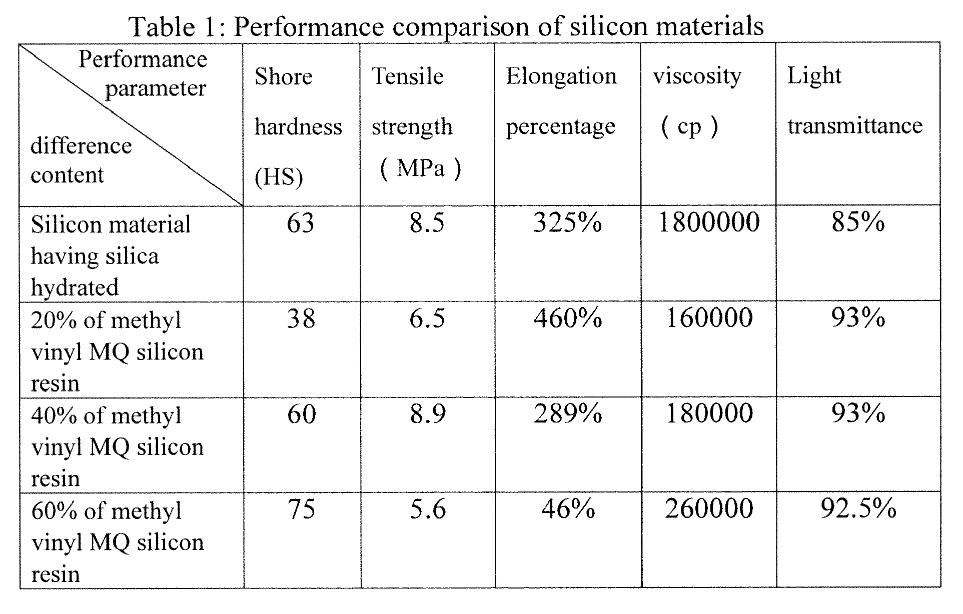

The comparison shows that when the weight percent of the methyl vinyl MQ silicon resin in the base compound is 40%, the integral performance of the silicone material is superior to the other three, furthermore, the light transmittance is greatly improved than the Silicon material having silica hydrated.

### Embodiment IV

100 gram of base component is prepared, in which the weight percentage of Vinyl in the methyl vinyl MQ silicon resin is 1%, the weight percentage of the methyl vinyl MQ silicon resin in the base compound is 40%; 5 gram of silicone oil containing hydrogen and 0.01 gram of inhibiting agent are added into the base compound, stirring it uniformly; 0.02 gram of accelerating agent is added into the base compound, stirring it uniformly. The mixed composition is solidified to get the needed silicone material.

### Embodiment V

100 gram of base component is prepared, in which the weight percentage of Vinyl in the methyl vinyl MQ silicon resin is 2%, the weight percentage of the methyl vinyl MQ silicon resin in the base compound is 40%; 5 gram of silicone oil containing hydrogen and 0.01 gram of inhibiting agent are added into the base compound, stirring it uniformly; 0.02 gram of accelerating agent is added into the base compound, stirring it uniformly. The mixed composition is solidified to get the needed silicone material.

### Embodiment VI

100 gram of base component is prepared, in which the weight percent of Vinyl in the methyl vinyl MQ silicon resin is 3.6%, the weight percent of the methyl vinyl MQ silicon resin in the base compound is 40%; 5 gram of silicone oil containing hydrogen and 0.01 gram of inhibiting agent are added into the base compound, stirring it uniformly; 0.02 gram of accelerating agent is added into the base compound, stirring it uniformly. The mixed composition is solidified to get the needed silicone material.

According to the above three embodiments, the weight percentage of the vinyl in the methyl vinyl MQ silicon resin is different, the performance of the silicon resin is correspondingly different. Comparison of performances of the three silicon resins show as following table 2.

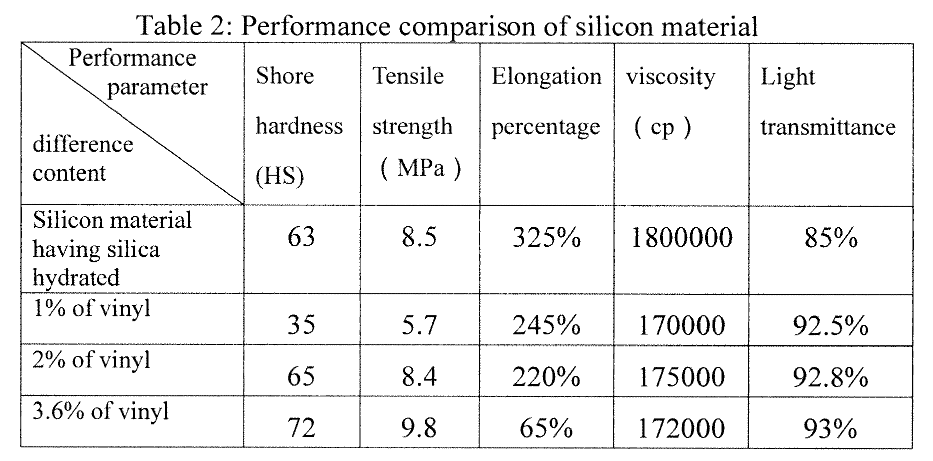

The comparison shows that when the weight percentage of the vinyl in the methyl vinyl MQ silicon resin is 2%, the integral performance of the silicon material is superior to the other three. Furthermore, the light transmittance is greatly improved than the silicone material having silica hydrated, equal to light transmittance of a glass. Moreover, the disclosure silicone material with the weight percent of the vinyl in the methyl vinyl MQ silicon resin is 2% also has other performances approximate the Silicon material having silica hydrated.

The silicone material is achieved by adding the methyl vinyl MQ silicon resin, and removing the silica hydrated, thus to improve the light transmittance of the silicone material. Moreover, the performance of the silicone material can be further improved by adjusting the content of the vinyl in the methyl vinyl MQ silicon resin. The process to fabricate the silicone resin is simple, and has a high productivity. The silicone material also can be applied to produce tableware, cabinet etc.

While the invention has been described in terms of what is presently considered to be the most practical and preferred embodiments, it is to be understood that the invention needs not be limited to the disclosed embodiment. On the contrary, it is intended to cover various modifications and similar arrangements included within the spirit and scope of the appended claims which are to be accorded with the broadest interpretation so as to encompass all such modifications and similar structures.

## Claims

1. A feeding bottle comprising:
a bottle body having a neck section, the neck section defining an opening;
a retaining member having a bowl portion and a barrel portion integrally formed in the bowl portion, the bowl portion including a bottom wall, an extending wall surrounding the bottom wall to define a chamber, and a peripheral flange extending from a periphery of the extending wall, the barrel portion arranged on the bottom wall and extends out from the chamber to form a clamping section relative to the extending wall;
a sucking component including a tube and a sucking head connected to an end of the tube; and
a nipple including a sucking portion and a cover portion integrally formed with the sucking portion, the cover portion including a latching section, and the latching section forming a resisting flange at the periphery;
wherein the sucking component is connected to the retaining member, the retaining member engages into the bottle body, with the bottom wall and the extending wall are received in the opening, and the peripheral flange abuts on the top of the neck section, the nipple engages with the retaining member, with the latching section fits with the clamping section, and the resisting flange abuts against the peripheral flange.

2. The feeding bottle according to claim 1, wherein the bottle body includes a top portion, the top portion includes an assembling section and the neck section has a smaller diameter than the assembling section, and the feeding bottle includes an engaging case to fit with the top portion.

3. The feeding bottle according to claim 2, wherein the engaging case includes a second neck section to fit with the neck section of the bottle body, the second neck section defines an outer thread, the feeding bottle includes a cover defined an inner thread to engage with the outer thread of the second neck section.

4. The feeding bottle according to claim 1, wherein the bottle wall of the bowl portion defines a through central aperture, and the central aperture is connected to the other end of the tube.

5. The feeding bottle according to claim 4, wherein the barrel portion surrounds the central aperture, an annular space is defined between the extending wall and the barrel portion, and the bottom wall defines a plurality of cutouts in the space.

6. The feeding bottle according to claim 1, wherein the sucking head includes a main body and a plurality of protrusions protruding from the bottle body, the protrusions prevents the sucking head substantially attach on a bottle bottom.

7. The feeding bottle according to claim 1, wherein the latching section of the cover portion defines a plurality of air slots, and the air slots extend through the resisting flange.

8. The feeding bottle according to claim 8, wherein the resisting flange correspondingly protrudes air-guiding valves at the bottom surface thereof the to communicate with the air slots, allowing outer air into the bottle body and stopping air in the bottle body out.

9. The feeding bottle according to claim 1, wherein the bottle body, the retaining member, the sucking component and the nipple are made of silicone.

10. A feeding bottle, comprising:
a bottle body defining an opening;
a retaining member having a bowl portion and a barrel portion partly protruding from the bowl portion, the bowl portion includes a peripheral flange;
a sucking component including a tube and a sucking head connected to an end of the tube, the other end of the tube connected to the retaining member; and
a nipple including a latching section having a resisting flange;
wherein the bottle body, the retaining member, the sucking component, and the nipple are made of silicone, the retaining member engages into the bottle body, the tube and the sucking head are received in the bottle body, the bowl portion is received in the opening, and the peripheral flange abuts against the top of the opening, the nipple engages with the retaining member, and the latching section fits with the barrel portion, and the resisting flange abuts on the peripheral flange.

11. A silicone material essentially consisting of:
100 parts by weight of a base compound made of a vinyl silicon oil and a methyl vinyl MQ silicon resin, in which, the weight ratio of vinyl silicon oil and methyl vinyl MQ silicon resin: 100:10-60;
2-10 parts by weight of a silicone oil containing hydrogen;
0.01-0.06 parts by weight of an inhibiting agent; and
0.01-0.08 parts by weight of an accelerating agent.

12. The silicon material according to claim 11, wherein the molecular formula of the methyl vinyl MQ silicon resin is: 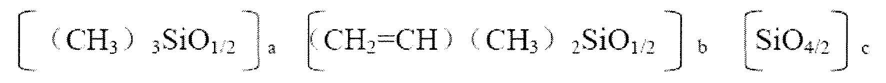 wherein, (a+b) /c=0.5 ∼ 1, the weight percent of the vinyl in methyl vinyl MQ silicon resin can be in a range from 1.0%-3.6%, preferably 2%.

13. The silicon material according to claim 11, wherein the Vinyl silicon is polymethyl siloxane having vinyl long chain, the molecular formula of the Vinyl silicon is: 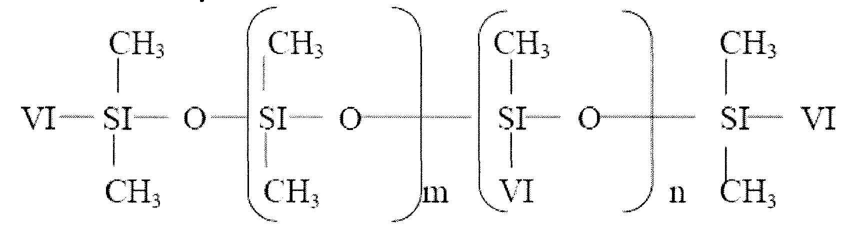 wherein, the character VI expresses vinyl.

14. The silicon material according to claim 11, wherein the molecular formula of the silicone oil containing hydrogen is:

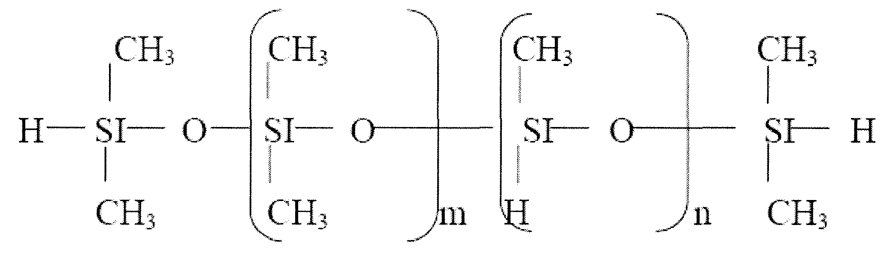

15. The silicone material according to claim 11, wherein the accelerating agent is an agent containing platinum and gold, wherein, the content of the platinum is in a range from about 1000-6000ppm (part per million).
